# EUROPEAN PATENT APPLICATION

(11) **EP 2 337 243 A1**
(43) Date of publication of application: **22.06.2011**
(21) Application number: 09180000.3
(22) Date of filing: 18.12.2009
(51) Int. Cl.: H04B 10/148, H04B 10/158, H04J 14/06

(54) **Apparatus and method for receiving a polarisation-multiplexed optical signal**

(71) Applicant: Nokia Siemens Networks Oy, 02610 Espoo (FI)
(72) Inventor: Jansen, Sander, 81827, München (DE); Stahl, David, 85716, Unterschleißheim (DE)

(57) **Abstract**

An optical receiving apparatus for receiving a polarization multiplexed optical signal and a method for receiving an optical signal, the apparatus comprising a polarization dependent element, such as an optical amplifier, for receiving the input optical signal, a polarization maintaining optical element coupled to the polarization dependent element, and a polarization diverse optical receiving element coupled to the polarization maintaining element, wherein the polarization axes of the three elements are optically aligned.

## Description

### FIELD OF THE INVENTION

The present invention refers to optical receivers and methods for receiving optical signals, and in particular to improved methods and apparatus for reducing system deteriorations due to polarization effects.

### BACKGROUND OF THE INVENTION

Conventional fiber-optic transmission systems typically use direct detection and operate at 10 Gb/s and 40 Gb/s. However, especially at 40 Gb/s and above these direct detection systems offer a low tolerance to linear impairments such as chromatic dispersion (CD) and polarization mode dispersion (PMD). The tolerance towards these linear impairments can be increased significantly through the use of conventional coherent detection. In combination with digital signal processing, conventional coherent receivers, and in particular conventional polarization diverse coherent detectors, can provide a better tolerance towards chromatic dispersion (CD) and polarization mode dispersion (PMD) and significant benefits with respect to amplified spontaneous emission (ASE) noise.

In conventional applications, a polarization diverse coherent detector is often combined with a polarization multiplexed (POLMUX) signal. A POLMUX signal carries information on the two states of polarization that single-mode fiber supports and allows to double the spectral efficiency of a transmission system. However, polarization multiplexed signals are affected by polarization dependant loss (PDL) resulting in signal degradation and higher bit error rate (BER) which limits maximum transmission distance.

In conventional coherent receivers optical amplification is required in order to enhance the data before that the signal can be detected. In most receivers an erbium-doped fiber amplifier (EDFA) is used for this amplification. Semiconductor Optical Amplifiers (SOAs) can be used as an alternative to erbium-doped fiber amplifiers. The Semiconductor Optical Amplifiers (SOAs) although being cost-effective amplifiers with a small form factor, unfortunately exhibit a polarization dependent gain (PDG), resulting in deterioration of system performance.

Based upon the above discussions, it is concluded that there is a need in the art, for an improved optical receiving apparatus for receiving a polarization multiplexed optical signal and an improved method for receiving an optical signal. The improved optical receiving apparatus and method for receiving an optical signal should be capable of significantly reducing the influence of polarization dependent gain (PDG) and polarization dependant loss (PDL) therefore improving the signal's performance.

### SUMMARY OF THE INVENTION

In order to overcome the above-described need in the art, the present invention discloses an optical receiving apparatus for receiving a polarization multiplexed optical signal, comprising a polarization diverse optical receiving element, a polarization maintaining optical element directly coupled with the polarization diverse optical receiving element and a polarization dependent element directly coupled with the polarization maintaining optical element.

In a further embodiment, the polarization maintaining optical element may be a polarization maintaining optical fiber.

In other embodiments of the present invention the polarization diverse optical receiving element may have a principal axis of polarization and the polarization maintaining optical element may have a principal axis of polarization as well.

It is also an embodiment, that the principal axis of polarization of the polarization maintaining optical element is aligned with the principal axis of polarization of the polarization diverse optical receiving element.

In a further embodiment, the polarization dependent element may have a principal axis of polarization and this principal axis of polarization of the polarization maintaining optical element may be aligned with principal axis of polarization of the polarization dependent element.

In a next embodiment, the polarization dependent element may be a polarization dependent gain element.

In an alternative embodiment of the invention, the polarization dependent element may be a polarization dependent loss element.

In a further embodiment, the polarization dependent gain may be a semiconductor optical amplifier.

It is also an embodiment, that the polarization dependent gain element is an erbium doped optical amplifier.

According to another embodiment, the polarization diverse optical receiving element may include electrical amplifiers. The problem stated above is also solved by a method for receiving an optical signal, the method comprising: providing a polarization diverse optical receiving element, providing a polarization maintaining optical element directly coupled with the polarization diverse optical receiving element and providing a polarization dependent element directly coupled with the polarization maintaining optical element.

In a next embodiment, the polarization diverse optical receiving element may have a principal axis of polarization, and the polarization maintaining optical element may have a principal axis of polarization and the polarization dependent element may have a principal axis of polarization.

In other embodiments of the present invention, the method may further comprise: aligning the principal axis of polarization of the polarization maintaining optical element with principal axis of polarization of the polarization diverse optical receiving element and aligning the principal axis of polarization of the polarization maintaining optical element with the principal axis of polarization of the polarization dependent element.

In a next embodiment, the optical signal may be a polarization multiplexed optical signal.

### BRIEF DESCRIPTION OF THE DRAWINGS

The invention is explained by way of example in more detail below with the aid of the attached drawings.
FIG 1 is a high level block diagram which illustrates an optical receiving apparatus according to an embodiment of the invention;
FIG 2 is an illustration of the coordinate systems of the polarization diverse optical receiving element, the polarization dependent element and the polarization maintaining optical element according to an embodiment of the invention.

### DESCRIPTION OF THE INVENTION

Illustrative embodiments will now be described with reference to the accompanying drawings to disclose the teachings of the present invention. While the present invention is described herein with reference to illustrative embodiments for particular applications, it should be understood that the invention is not limited thereto. Those having ordinary skill in the art and access to the teachings provided herein will recognize additional modifications, applications, and embodiments within the scope thereof and additional fields in which the present invention would be of significant utility.

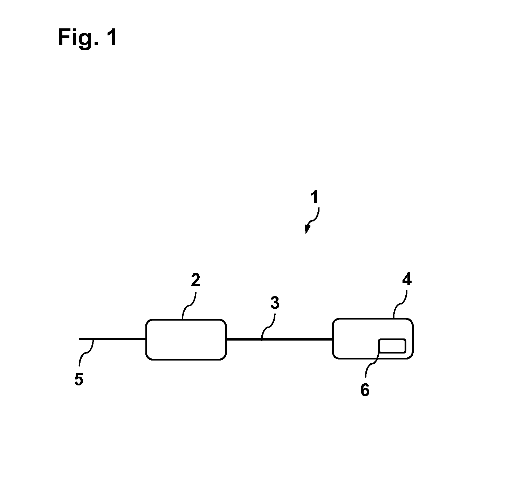

FIG 1 is a high level block diagram which illustrates an optical receiving apparatus 1 for receiving an optical signal 5, which may be a polarization multiplexed optical signal, according to one embodiment of the invention. The optical receiving apparatus 1 includes a polarization diverse optical receiving element 4, which may be a polarization diverse optical receiver, a polarization maintaining optical element 3, (for example a polarization maintaining optical fiber) directly coupled with the polarization diverse optical receiving element 4 and a polarization dependent element 2 directly coupled with the polarization maintaining optical element 3.

According to an embodiment of the invention, the polarization maintaining optical element 3 is directly connected to the polarization diverse optical receiving element 4 at one end, and to the polarization dependent element 2 at the other end.

By the polarization maintaining optical fiber is meant a birefringent fiber having two principal axes of polarization, also known as the fast and the slow axis, and which supports two well defined orthogonal propagation modes of light whose refractive indices differ by 10⁻⁶ or more.

According to an embodiment of the invention, the coordinate system of the polarization maintaining optical element 3 is aligned to the coordinate system of the polarization diverse optical receiving element 4, and to the coordinate system of the polarization dependent element 2, so that both coordinate systems coincide with each other.

In embodiments of the present invention, the polarization dependent element 2 is a polarization dependent gain element and in particular a semiconductor optical amplifier, like for example an erbium doped optical amplifier or a semiconductor optical amplifier (SOA).

In embodiments of the present invention, the polarization dependent element 2 is a polarization dependent loss element.

In both cases the alignment of the polarization maintaining optical element 3 fixes the transformation of the polarization dependent gain (PDG) vector or polarization dependent loss (PDL) vector to the coordinate system of the coherent optical receiving element 4 so that both coordinate systems coincide with each other.

In embodiments of the present invention, the polarization diverse optical receiving element 4 may include an electrical amplifier 6 or a plurality of electrical amplifiers 6 and a plurality of analog-to-digital converters (ADCs).

Fixing the relation between the coordinate system of the polarization diverse optical receiving element 4 and the coordinate system of the polarization dependent element 2, which may be a polarization dependent gain element or a polarization dependent loss element gain element, it is possible to calibrate out the polarization dependent gain (PDG) or polarization dependent loss (PDL) induced by the polarization dependent element 2 utilizing the electrical amplifiers 6 that may be used at the polarization diverse optical receiving element 4 preferably before the analog-to-digital converters (ADCs).

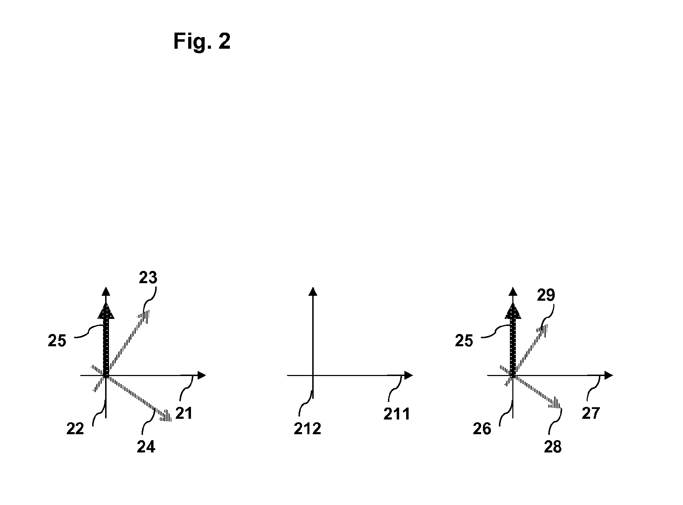

FIG 2 is an illustration of the coordinate systems of the polarization diverse optical receiving element 4, the polarization dependent element 2 and the polarization maintaining optical element 3 according to an embodiment of the invention.

The coordinate system of the polarization diverse optical receiving element 4 includes the two principal orthogonal axes, the principal axis 26 and the principal axis 27; the coordinate system of the polarization dependent element 2 includes the two principal orthogonal axes, the principal axis 21 and the principal axis 22; the coordinate system of the polarization maintaining optical element 3 includes the two principal orthogonal axes, the principal axis 211 and the principal axis 212.

The polarization maintaining optical element 3 fixes the transformation of the polarization dependent element vector 25 to the coordinate system of the polarization diverse optical receiving element 4 so that the coordinate system of the polarization dependent element 2 including the principal axis 21 and 22 coincide with the coordinate system of the polarization diverse optical receiving element 4 including the two principal axis 26 and the principal axis 27.

Being the principal axes orthogonal, it is sufficient that a principal axis of polarization 211 or 212 of the polarization maintaining optical element 3 is aligned with a principal axis of polarization 26 or 27 of the polarization diverse optical receiving element 4 and that a principal axis of polarization 211 or 212 of the polarization maintaining optical element 3 is aligned with a principal axis of polarization 21 or 22 of the polarization dependent element 2.

Known methods are available to the person skilled in the art to perform this alignment.

As a result of the discussed alignment, the effect of polarization dependent gain or polarization dependent loss on the orthogonal components 23 and 24 of the optical signal at the polarization dependent element 2 are substantially reduced and equally distributed over the two orthogonal components 28 and 29 at the polarization diverse optical receiving element 4. These effects can be further reduced utilizing the electrical amplifiers 6 that may be used at the polarization diverse optical receiving element 4 preferably before the analog-to-digital converters (ADCs).

## Claims

1. An optical receiving apparatus for receiving a polarization multiplexed optical signal, comprising:
a polarization diverse optical receiving element;
a polarization maintaining optical element directly coupled with the polarization diverse optical receiving element;
a polarization dependent element directly coupled with the polarization maintaining optical element.

2. An apparatus as in claim 1, the polarization maintaining optical element being a polarization maintaining optical fiber.

3. An apparatus as in claim 1, the polarization diverse optical receiving element having a principal axis of polarization.

4. An apparatus as in claim 1 or 2, the polarization maintaining optical element having a principal axis of polarization.

5. An apparatus as in 3 and 4, the principal axis of polarization of the polarization maintaining optical element being aligned with the principal axis of polarization of the polarization diverse optical receiving element.

6. An apparatus as in claim 1, the polarization dependent element having a principal axis of polarization.

7. An apparatus as in claims 4 and 6, the principal axis of polarization of the polarization maintaining optical element being aligned with principal axis of polarization of the polarization dependent element.

8. An apparatus as in claim 1, the polarization dependent element being a polarization dependent gain element.

9. An apparatus as in claim 8, the polarization dependent gain element being a semiconductor optical amplifier.

10. An apparatus as in claim 8, the polarization dependent gain element being an erbium doped optical amplifier.

11. An apparatus as in any of the preceding claims 1 to 10, the polarization diverse optical receiving element including an electrical amplifier.

12. An apparatus as in claim 1, the polarization dependent element being a polarization dependent loss element.

13. A method for receiving an optical signal, the method comprising:
providing a polarization diverse optical receiving element;
providing a polarization maintaining optical element directly coupled with the polarization diverse optical receiving element;
providing a polarization dependent element directly coupled with the polarization maintaining optical element.

14. A method as in claim 13, wherein the polarization diverse optical receiving element has a principal axis of polarization, and wherein the polarization maintaining optical element has a principal axis of polarization and wherein the polarization dependent element has a principal axis of polarization.

15. A method as in claim 14, further comprising:
aligning the principal axis of polarization of the polarization maintaining optical element with principal axis of polarization of the polarization diverse optical receiving element;
aligning the principal axis of polarization of the polarization maintaining optical element with the principal axis of polarization of the polarization dependent element.

16. A method as in claim 15, wherein the optical signal is a polarization multiplexed optical signal.
